# EUROPEAN PATENT SPECIFICATION

(11) **EP 0 353 634 B1**
(45) Date of publication and mention of the grant of the patent: **01.12.1993**
(21) Application number: 89113883.6
(22) Date of filing: 27.07.1989
(51) Int. Cl.: B25D 17/00, F16B 35/04

(54) **Arrangement for preventing through bolts from loosening**
Anordnung zum Sichern von Durchgangsschrauben
Dispositif pour empêcher des boulons traversants de se détacher

(30) Priority: 04.08.1988 JP 104241/88; 31.08.1988 JP 115386/88
(43) Date of publication of application: 07.02.1990
(73) Proprietor: NIPPON PNEUMATIC MANUFACTURING CO. LTD., Osaka (JP)
(72) Inventor: Terada, Hiromu, Ikoma-shi Nara (JP); Ikeda, Yutaka, Nabara-shi Mie (JP); Ito, Yoshifumi, Matsubara-shi Osaka (JP); Tamura, Fuminori, Kitakatsuragi-gun Nara (JP)
(74) Representative: Glawe, Delfs, Moll & Partner

(56) References cited:
- WO-A-87/03942
- DE-C- 315 541
- GB-A- 1 449 114
- JP-U- 571 110

## Description

The present invention relates to an arrangement for preventing long through bolts from loosening, according to the preamble of the single claim.

Such a prior art arrangement is disclosed in Japanese Utility Model Publication 57-1110. This publication teaches the use of a plurality of through bolts to couple together a cylinder, a handle cap and a chisel holder provided over and under the cylinder. These parts form an impact tool.

The bolts have their bottom end fixed to the chisel holder by suitable means. A nut is tightened on a male thread formed on their top end of each bolt protruding from the handle cap. Then some measure is taken to prevent the bolts from getting loose.

More specifically, after tightening the nuts, a washer-type stopper having a polygonal hole complementary in shape to the polygonal contour of the nuts is fitted around each nut to prevent it from turning. The stopper has its outer edge in engagement with an engaging portion formed on the handle cap. Thus the nuts are prevented from rotating relative to the handle cap.

With this arrangement, the through bolts are fixed relative to the chisel holder and the nut tightened on the male screw is unrotatable with respect to the handle cap.

But before the nuts are tightened on the bolts, the through bolts are free to move about except at their bottom end. Since the through bolts are very long compared with their diameter, they tend to get twisted at their shank when tightening the nuts. This will make it difficult to obtain a sufficient tightening force.

If the through bolts get twisted, they tend to get loose against the frictional resistance between the nut and its seating surface. If the tool is used with the bolts twisted, the durability of bolts will decrease.

It is an object of the present invention to provide an arrangement for preventing the long through bolt from loosening which obviates the abovesaid shortcomings and which can prevent the through bolts from getting twisted.

In accordance with the present invention, a locking plate is unrotatably fitted on an engaging portion formed on an upper part of each through bolt. The locking plate has an engaging portion adapted to unrotatably engage the uppermost member. In this state, even when a top nut is tightened on the male screw at top of the through bolt, no twisting will occur to the through bolt.

Other features and objects of the present invention will become apparent from the following description taken with reference to the accompanying drawings, in which:
Fig. 1 is a front view of an impact tool embodying the present invention;
Fig. 2 is a plan view of the same;
Fig. 3 is an enlarged vertical sectional front view of a portion of the same;
Fig. 4 is a front view of the impact tool provided with swivel flanges; and
Fig. 5 is an enlarged vertical sectional side view of one of the swivel flanges.

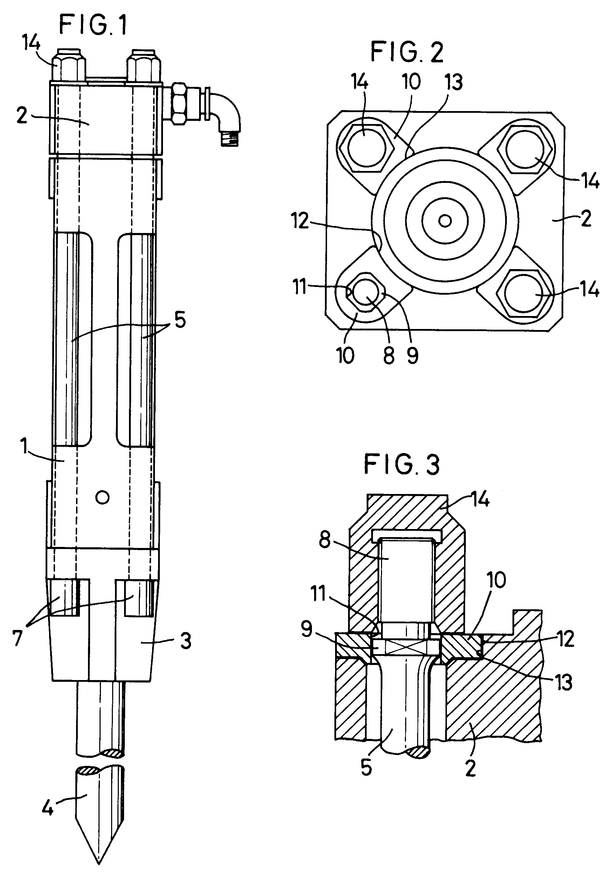

Referring first to Figs. 1 to 3, an impact tool includes a cylinder 1, a handle cap 2 fixed to the top of the cylinder 1, and a chisel holder 3 fixed to the bottom of the cylinder 1. A chisel 4 is mounted in the holder 3.

A plurality of through bolts 5 extend through holes formed in each of the cylinder 1, the handle cap 2 and the holder 3. The bolts 5 have their bottom ends fixed so as to be unrotatable with respect to the holder 3. Namely, an end member 7 may be screwed on the bottom end of each bolt 5 to fix them together or may be integrally provided on the bottom end of the bolt 5. The end members 7 are then brought into engagement with engaging portions provided on the holder 3 so that each bolt 5 is unrotatable with respect to the holder 3. The structure at this portion may be a conventional one.

Each bolt 5 is formed with a male thread 8 on top end portion thereof as shown in Fig. 3 and immediately thereunder with an engaging portion 9.

In the preferred embodiment, the engaging portions 9 have a polygonal contour as shown in Fig. 2 at the lower left corner.

Numeral 10 designates a locking plate in the form of a thick metal plate having a polygonal hole 11 to receive a polygonal engaging portion 9 on the bolt 5.

The locking plate 10 is formed at its bottom with an annular tapered portion having a tapered surface adapted to engage a tapered surface formed at top of the bolt hole of the cap 2. This arrangement ensures that no eccentric load is applied to the bolt because of alignment of the bolt hole with the axis of the through bolt.

The locking plates 10 may have part of their edge shaped e.g. arcuately as shown at 12. They have their respective edges 12 in engagement with a seating face 13 formed on the handle cap 2 to prevent themselves from rotating relative to the cap 2.

Numeral 14 designats a top nut, which is in the form of a box nut in the preferred embodiment. It is adapted to be screwed onto the male thread 8 on each bolt 5.

Even if the nuts 14 are tightened hard, the bolts 5 will not get twisted. Only the nuts 14, having their flat bottom face in contact with the locking plate 10, slip on it without getting twisted. A suitable locking means should be provided between the nut 14 and the male thread 8.

With this arrangement, the top end of each through bolt 5 will be prevented from turning.

By eliminating the fear of the bolts getting twisted, a suitable tensile force can be applied to the through bolts.

## Claims

1. An arrangement for preventing through bolts (5) from loosening, said through bolts (5) being used to couple a plurality of members, said arrangement comprising a plurality of through bolts (5) extending through said plurality of members and having lower portion thereof unrotatably fixed to the lower most one of said members (7), each said through bolt (5) being formed at the top end thereof with a male thread (8), top nuts (14) each screwed onto said male thread (8) on said each through bolt, and locking plates (10) fitted to be in engagement with the uppermost one (13) of said plurality of members so as not to be rotatable with respect to the uppermost member (13)
**characterized** in that each through bolt (5) is formed near the top end thereof with an engaging portion (9) and that each locking plate (10) engages said engaging portion (9) on the respective through bolt, so as not to be rotatable with respect to said through bolt.

## Patentansprüche

1. Anordnung zum Verhindern des Losewerdens von Schraubbolzen (5), die zwei oder mehr Teile miteinander verbinden, mit einer Anzahl von Schraubbolzen (5), die sich durch die Teile erstrecken und deren unterer Bereich unverdrehbar am untersten der Teile (7) befestigt ist, wobei jeder Schraubbolzen (5) an seinem oberen Ende ein Gewinde (8) aufweist, oberen Muttern (14), die auf das Gewinde (8) jeweils eines Schraubbolzens aufgeschraubt sind, und Sperrplatten (10), die am obersten (13) der Teile derart in Eingriff sind, daß sie gegenüber dem obersten Teil (13) nicht drehbar sind, dadurch **gekennzeichnet,** daß an jedem Schraubbolzen (5) nahe seinem oberen Ende ein Eingriffsbereich (9) ausgebildet ist und daß jede Sperrplatte (10) mit dem Eingriffsbereich (9) des zugehörigen Schraubbolzens derart in Eingriff ist, daß sie relativ zum Schraubbolzen nicht drehbar ist.

## Revendications

1. Dispositif pour empêcher le desserrage de boulons traversants (5), lesdits boulons traversants (5) servant à assembler une pluralité de pièces, ledit dispositif comprenant une pluralité de boulons traversants (5) qui s'étendent à travers ladite pluralité d'éléments et dont la partie inférieure est fixée de façon non tournante à l'élément situé le plus bas parmi lesdits éléments (7), chaquedit boulon traversant (5) comportant à son extrémité supérieure un filetage mâle (8), des écrous supérieurs (14) vissés chacun sur ledit filetage mâle (8) de chaque dit boulon traversant, et des plaquettes de verrouillage (10) ajustées de manière à être en prise avec l'élément situé le plus haut (13) parmi ladite pluralité d'éléments, afin de ne pas pouvoir tourner par rapport à l'élément supérieur(13),
caractérisé en ce que chaque boulon traversant (5) comporte, près de son extrémité supérieure, une partie de retenue (9) et en ce que chaque plaquette de verouillage (10) vient en prise avec ladite partie de retenue (9) du boulon traversant respectif, de sorte que ladite plaquette ne peut pas tourner par rapport audit boulon traversant.
